# EUROPEAN PATENT APPLICATION

(11) **EP 3 760 885 A1**
(43) Date of publication of application: **06.01.2021**
(21) Application number: 19184208.7
(22) Date of filing: 03.07.2019
(51) Int. Cl.: F16B 25/00

(54) **HAMMER-IN CONCRETE SCREW**

(71) Applicant: Hilti Aktiengesellschaft, 9494 Schaan (LI)
(72) Inventor: Schaeffer, Marc, 8852 Altendorf (CH)
(74) Representative: Hilti Aktiengesellschaft Corporate Intellectual Property

(57) **Abstract**

The invention relates to a screw comprising a shank, wherein a thread helix receiving groove that winds around the shank is provided in the shank, and wherein the shank has a screw tip, and further comprising a thread helix having a base and a crest, wherein the thread helix and the shank are separate parts, wherein the base of the thread helix is arranged in the thread helix receiving groove, and wherein the crest of the thread helix projects radially from the shank. According to the invention, the crest of the thread helix of the unconstricted screw is displaceable towards the shank by linearly driving the shank, together with the thread helix, into an undersized borehole in a concrete or masonry substrate. The invention also relates to a method for installing such a screw.

## Description

The invention relates to a screw according to the preamble of claim 1. Such a screw comprises a shank, wherein a thread helix receiving groove that winds around the shank is provided in the shank, and wherein the shank has a screw tip, and further comprises a thread helix having a base and a crest, wherein the thread helix and the shank are separate parts, wherein the base of the thread helix is arranged in the thread helix receiving groove, and wherein the crest of the thread helix projects radially from the shank.

US2010247267 A1 discloses concrete screws, i.e. screws that can be tappingly screwed into a hole in a concrete substrate. For screwing-in concrete screws, impact screw drivers are often used, in order to generate the torque and/or force required for tapping action in a concrete or masonry substrate.

US20180283435 A1 discloses a concrete screw that has a thread helix which is separate from the shank. The thread helix is located in a thread helix receiving groove that winds around the shank. The groove has an inclined forward flank. Should the borehole, in which the screw is located, widen, e.g. in a seismic situation, the thread helix can glide onto the forward flank and when doing so, it is displaced radially outwards by the inclined forward flank. Thus, the forward flank provides a wedge that can radially expand the thread helix, thereby maintaining engagement with the borehole wall. The groove also has an inclined rearward flank, but in contrast to the forward flank, the rearward flank is relatively steep, in order to avoid expansion of the thread helix when the screw is biased towards its screw tip during installation of the screw.

It is an object of the invention to provide a screw that is, whilst being efficient to manufacture and having good performance, particularly productive to install and/or particularly versatile.

This object is achieved by a screw according to claim 1. Dependent claims refer to preferred embodiments of the invention.

According to the invention, the crest of the thread helix of the unconstricted screw is displaceable towards the shank by linearly, in particular strictly-linearly, driving the shank, together with the thread helix, into an undersized borehole in a concrete or masonry substrate.

Accordingly, the crest of the thread helix of the previously unconstricted screw can be brought closer to the shank, namely closer as compared to the previous unconstricted state, by linear driving, in particular by hammering-in, the shank together with the thread helix into a borehole located in a concrete or masonry substrate, which borehole is undersized with respect to the thread helix of the screw in its unconstricted state. In this process, the wall of the borehole that is undersized with respect to the thread helix abuts against the thread helix, thereby displacing at least the crest of the thread helix towards the shank.

The thread helix is separate from the shank, and the screw is so configured that at least the crest of the thread helix can radially recede as the - previously unconstricted - screw is axially advanced into a borehole that is undersized with respect to the unconstricted thread helix. In contrast to the screw of US20180283435 A1, which is primarily designed so that the thread helix tends to radially expand when the shank is axially loaded, the thread helix of the present screw is designed to radially contract as it is loaded during screw installation. This can for example be achieved by providing a thread helix accommodation cavity located at the thread helix receiving groove, i.e. by providing the thread helix receiving groove with surplus space, or by providing sufficient space for accommodating the swivelled thread helix adjacent to the shank. The inventive design allows to hammer-in the screw into a borehole in a concrete or masonry substrate instead of screwing it in, thereby providing a particularly easy and highly productive installation process. Once the desired installation depth is reached, the thread helix can be made to press against the borehole wall, for example by elasticity of the thread helix, by applying an external force, in particular a pull-out force, or/and by rotation the shank, which will, due to the helical design of the thread helix, bias the thread helix radially outwardly, i.e. activate the thread helix.

As already mentioned, it can be particularly advantageous if the thread helix receiving groove includes a thread helix accommodation cavity for receiving at least a portion of the thread helix as it is displaced towards the shank. Accordingly, the thread helix receiving groove is more spacious than needed for accommodating the thread helix only in its original, unconstricted state - rather, the thread helix receiving groove has an additional thread helix accommodation cavity that accommodates at least portions of the thread helix as the thread helix is displaced during installation of the screw. In other words, at least some of the space for accommodating the thread helix in its displaced state is provided by a recess in the shank, namely the thread helix receiving groove. This can allow particularly effective and/or reliable thread helix displacement.

Advantageously, the displacement of the thread helix is based on a bending-type motion. Thus, preferably, the crest of the thread helix of the unconstricted screw is displaceable towards the shank by swivelling at least the crest of the thread helix away from the screw tip by linearly driving the shank, together with the thread helix, into the undersized borehole in the concrete or masonry substrate. Thus, at least the crest of the thread helix pivots away from the tip, i.e. in the rearwards direction. It is particularly preferred if the crest of the thread helix of the unconstricted screw is displaceable towards the shank by jointly swivelling the crest of the thread helix and the base of the thread helix away from the screw tip by linearly driving the shank, together with the thread helix, into the undersized borehole in the concrete or masonry substrate. Accordingly, all of the thread helix pivots away from the tip, i.e. in the rearward direction. Basing the thread helix displacement on a swivel motion can be particularly advantageous from a design, manufacturing and/or reliability point of view. Swivelling portions of the thread helix away from the screw tip implies that these portions of the thread helix are swivelled rearwardly, i.e. in the direction that opposes the installation direction. In particular, it can imply that these portions of the thread helix are swivelled towards the drive of the screw.

In particular if a swivelling thread helix movement is envisaged, the thread helix accommodation cavity can axially adjoin the thread helix. In other words, the thread helix accommodation cavity is located next to the thread helix, with an axial offset with respect to the thread helix. Thus, the thread helix accommodation cavity winds around the shank, in particular rearwardly of the adjacent thread helix, i.e. the thread helix accommodation cavity has a rearward offset with respect to the adjoining thread helix.

It is particularly preferred if the crest of the thread helix of the unconstricted screw is elastically displaceable towards the shank by linearly driving the shank, together with the thread helix, into the undersized borehole in the concrete or masonry substrate. Accordingly, the crest of the thread helix tends to move back to its original, unconstricted and unbiased position by virtue of elasticity, which can provide anchoring, at least preliminary-type anchoring, of the thread helix on the borehole wall without the need to apply forces to the screw. In order to provide elastic displaceability, the thread helix can preferably consist of spring steel.

In particular, the screw comprises a drive for transmitting torque to the shank, which is arranged on the shank remote from the screw tip. The drive can be of any screw drive type. It can, for example, be an external polygon drive, an internal polygon drive, in particular a hex drive or a hex socket drive, a slotted drive, a cruciform drive, a lobular drive or a special drive. Preferably, the screw has a head, located preferably in the an axially rear region of the shank, and the drive is provided on the head.

The invention also relates to a method for installing a screw as described here, in which, in a hammering-in step, the shank is hammered-into an undersized borehole in a concrete or masonry substrate, thereby displacing at least the crest of the thread helix towards the shank. Accordingly, the screw is installed as intended.

It is particularly preferred that, following the hammering-in step, the crest of the thread helix is biased radially outwards against a wall of the borehole, for example by applying mechanical force to the screw, in particular by rotating the screw. This can lock the screw against the borehole wall.

Features that are described here in connection with the inventive screw can also be used in connection with the inventive method, and features that are described here in connection with the inventive method can also be used in connection with the inventive screw

In the unconstricted state, the screw, in particular its thread helix, is not compressed or squeezed and in particular the shank and the thread helix are positioned freely in the air. When the borehole is undersized with respect to the thread helix, this can in particular imply that it has at least regionally smaller cross section than the unconstricted thread helix. The crest of the thread helix of the unconstricted screw is displaceable towards the shank by linearly-only driving the shank, jointly with the thread helix, into the borehole, i.e. there is need for rotational movement. In particular, linear driving-in refers to the longitudinal axis of the shaft and/or the screw, i.e. linear driving-in is a movement parallel to the longitudinal axis.

Preferably, the shank consists of a metal material. Additionally or alternatively, the thread helix can also consist of a metal material. The thread helix and the shank can in particular consist of different materials which may, for example, be advantageous with regard to the load-bearing capacity and/or corrosion resistance. In addition to the thread helix, the screw can have additional helical thread-like structures.

Insofar as the axial direction, radial direction and/or circumferential direction are mentioned here, this can in particular refer to the longitudinal axis of the shank and/or of the screw. The directional attributes "forward" and "backward" are in particular used consistently here. The directional attributes "forward" and "backward" can in particular refer to the longitudinal axis of the screw, which means to the driving-in direction. In particular, the screw tip is located at the front end of the shank and the drive rearwards of the screw tip, preferably at the rear end of the shank. The screw tip can preferably be flat. However, the screw tip can also be pointed. The screw tip is the leading end of the shaft, i.e. that end which is intended to be inserted first into the borehole.

The thread helix receiving groove forms a recess, in particular a helical recess, in the shank. The thread helix preferably tapers, starting from its base, towards its crest. The crest of the thread helix projects over the shank and is in particular located radially further outside than the base of the thread helix, i.e. further away from the longitudinal axis than the base of the thread helix. However, a non-tapering design of the thread helix is also possible.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.

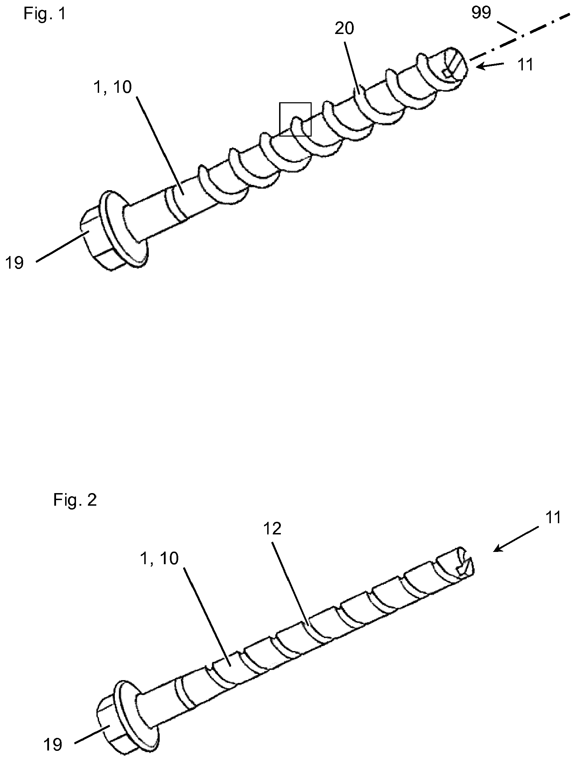

Figure 1 is a perspective representation of a screw.
Figure 2 is a perspective representation of the screw of figure 1 with the thread helix omitted.
Figure 3 is an enlarged longitudinal cross-section of the region of the of the screw of figure 1 marked with a rectangle in figure 1, showing two different positions of the thread helix for illustrating a method for installing the screw.

The figures show an embodiment of an inventive screw 1. The screw 1 comprises a shank 10 having a screw tip 11 at its front end. The screw 1 further comprises a drive 19, which is connected to the shank 10 at the rear end of the shank 10 to transmit torque to the shank 10. The shown drive 19 is, by way of example, a hex drive. However, other drives, can alternatively be used instead.

The screw 1 furthermore comprises a helical thread helix 20, having base 22 and a crest 21, wherein the thread helix 20 tapers from the base 22 towards the crest 21. The shank 10 is provided with a helical thread helix receiving groove 12, winding around the shank 10 and around the longitudinal axis 99 of the shank 10. The thread helix 20 is located in this thread helix receiving groove 12. In particular, the base 22 of the thread helix 20 is received in the thread helix receiving groove 12, whereas the crest 21 projects radially from the shank 10.

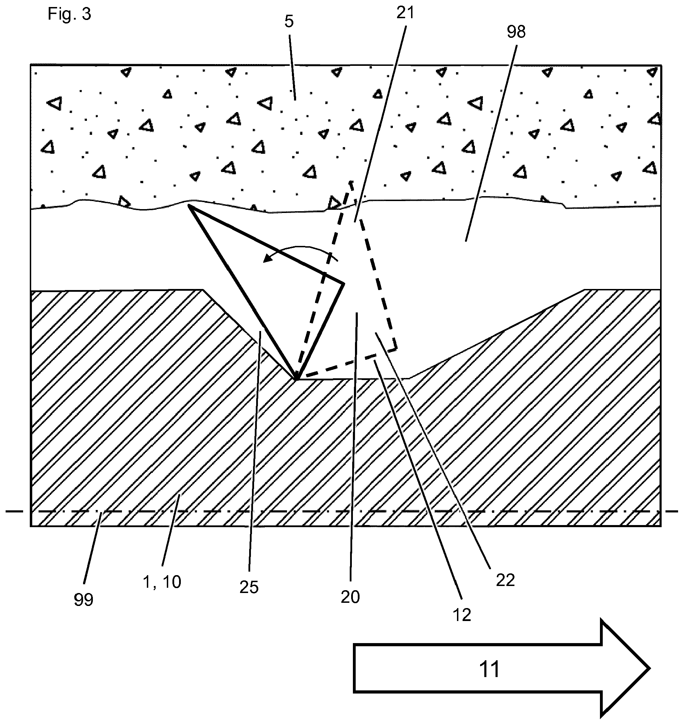

Figure 3 depicts the thread helix 20, using different line types, in two distinct positions: the dashed-line thread helix 20 illustrates a position that is present when the screw 1, in particular its thread helix 20, are unconstricted, whereas the solid-line thread helix 20 illustrates a position that is present during linear driving-in of the shank 10 into an undersized borehole 98 in a concrete or masonry substrate 5, in particular in a hammering-in step. In figure 3, the arrow marked with reference numeral 11 points to the screw tip 11, i.e. it points in the installation direction, which is the linear driving-in direction.

As can be taken from figure 3, the thread helix 20 can swivel backwards, i.e. away from the screw tip 11, as the wall of the undersized borehole 98 acts against the thread helix 20 when driving-in the shank 10 and the thread helix 20 into the undersized borehole 98. The thread helix receiving groove 12 comprises a thread helix accommodation cavity 25 that can receive the thread helix 20 as it swivels backwards. As the thread helix 20 swivels backwards, the crest 21 of the thread helix 20 approaches the shank 10 and the longitudinal axis 99 thereof. Accordingly, when the shank 10 is driven into a borehole 98, the thread helix 20 can tilt form the dashed-line position into the solid-line position of figure 3, leading to a reduction of the outer diameter of the thread helix 20, which allows to drive the shank 10 into a borehole 98 that is, on purpose, undersized with respect to the thread helix 20 in its original, i.e. dashed-line position. Accordingly, the crest 21 of the thread helix 20 of the previously unconstricted screw 1 is displaceable towards the shank 10 through linearly-only driving the shank 10 into the undersized borehole 98 in the concrete or masonry substrate 5.

Once the driving-in is completed, the thread helix can swivel back towards its original, i.e. dashed-line position, e.g. by elastic restoration forces, by applying a pull-out force to the screw 1 (i.e. a force that is directed opposite to the driving-in direction) or/and by rotation of the shank 10 in the borehole 98. The thread helix 20 is thus activated and locks the screw 1 in the borehole 98. Should the borehole 98 widen, for example by crack opening, the thread helix 20 can further expand radially, reliably locking the screw 1 also in seismic conditions.

## Claims

1. Screw (1) comprising
- a shank (10), wherein a thread helix receiving groove (12) that winds around the shank (10) is provided in the shank (10), and wherein the shank (10) has a screw tip (11), and
- a thread helix (20) having a base (22) and a crest (21), wherein the thread helix (20) and the shank (10) are separate parts, wherein the base (22) of the thread helix (20) is arranged in the thread helix receiving groove (12), and wherein the crest (21) of the thread helix (20) projects radially from the shank (10),
**characterized in that**
- the crest (21) of the thread helix (20) of the unconstricted screw (1) is displaceable towards the shank (10) by linearly driving the shank (10), together with the thread helix (20), into an undersized borehole (98) in a concrete or masonry substrate (5).

2. Screw (1) according to claim 1,
**characterized in that**
the thread helix receiving groove (12) includes a thread helix accommodation cavity (25) for receiving at least a portion of the thread helix (20) as it is displaced towards the shank (10).

3. Screw (1) according to any one of the proceeding claims,
**characterized in that**
the crest (21) of the thread helix (20) of the unconstricted screw (1) is displaceable towards the shank (10) by swivelling at least the crest (21) of the thread helix (20) away from the screw tip (11) by linearly driving the shank (10), together with the thread helix (20), into the undersized borehole (98) in the concrete or masonry substrate (5).

4. Screw (1) according to claim 3,
**characterized in that**
the crest (21) of the thread helix (20) of the unconstricted screw (1) is displaceable towards the shank (10) by jointly swivelling the crest (21) of the thread helix (20) and the base (22) of the thread helix (20) away from the screw tip (11) by linearly driving the shank (10), together with the thread helix (20), into the undersized borehole (98) in the concrete or masonry substrate (5).

5. Screw (1) according to claims 2 and 4,
**characterized in that**
the thread helix accommodation cavity (25) axially adjoins the thread helix (20).

6. Screw (1) according to any one of the proceeding claims,
**characterized in that**
the crest (21) of the thread helix (20) of the unconstricted screw (1) is elastically displaceable towards the shank (10) by linearly driving the shank (10), together with the thread helix (20), into the undersized borehole (98) in the concrete or masonry substrate (5).

7. Screw (1) according to any one of the proceeding claims,
**characterized in that**
it comprises a drive (19) for transmitting torque to the shank (10), which is arranged on the shank (10) remote from the screw tip (11).

8. Method for installing a screw (1) according to any one of the proceeding claims, in which, in a hammering-in step, the shank (10) is hammered-into an undersized borehole (98) in a concrete or masonry substrate (5), thereby displacing at least the crest (21) of the thread helix (20) towards the shank (10).

9. Method according to claim 8,
**characterized in that**
following the hammering-in step, the crest (21) of the thread helix (20) is biased radially outwards against a wall of the borehole (98).
